# EUROPEAN PATENT SPECIFICATION

(11) **EP 0 737 643 B1**
(45) Date of publication and mention of the grant of the patent: **13.09.2000**
(21) Application number: 95830153.3
(22) Date of filing: 14.04.1995
(51) Int. Cl.: B66B 1/00, H02M 3/07, G05F 3/20

(54) **Voltage generator-booster for supplying an approximately constant voltage level**
Spannungserhöhungsschaltung zur Erzeugung eines annähernd konstanten Spannungspegels
Circuit générateur élevateur de tension pour fournir un niveau de tension sensiblement constant

(43) Date of publication of application: 16.10.1996
(73) Proprietor: STMicroelectronics S.r.l., 20041 Agrate Brianza (Milano) (IT)
(72) Inventor: Pascucci, Luigi, I-20099 Sesto San Giovanni (IT)
(74) Representative: Cerbaro, Elena, Dr.

(56) References cited:
- EP-A- 0 257 810
- EP-A- 0 382 929
- EP-A- 0 638 984
- US-A- 5 132 895

## Description

The present invention relates to a voltage generator-booster for supplying an approximately constant voltage level.

Integrated circuits currently demand voltage levels that remain substantially constant alongside a variation in supply voltage. The voltage levels may be higher than the supply voltage, in which case a voltage generator (booster) for increasing the supply voltage is called for, or they may be lower, in which case the voltage generator provides for limiting the supply voltage. Generation of the high voltage is important, for example, in the case of nonvolatile memories with a 3 V supply voltage, the cells of which must therefore be read at a higher gate voltage; whereas, in the presence of a high supply voltage, this must be limited to prevent the reading of programmed cells.

If a circuit capable of operating at both high and low supply voltages is required, with a voltage generator for supplying an approximately constant voltage level alongside a variation in supply voltage, the generator must be capable of operating as both a voltage booster and limiter, depending on the supply voltage.

At present, known voltage boosters (see US-A-5,132,895) substantially comprise a charge pump circuit in turn comprising a bootstrap capacitor and pull-up circuit, and which operates in two steps: a first step to precharge the capacitor, wherein a first terminal of the capacitor is grounded and a second terminal is connected to the supply voltage to precharge the capacitor to roughly the supply voltage; and a second step wherein the first terminal of the capacitor is pulled up to the supply voltage, and the second terminal (which is therefore at nearly twice the supply voltage) is connected to an output. Even though the actual output voltage depends on the charge distribution between the bootstrap capacitor and the capacitance of the load supplied by the booster, so that the final output voltage is less than twice the supply voltage, the output voltage of known boosters is highly dependent on supply voltage, thus preventing them from being employed in devices operating within a wide range of different supply voltages (e.g. 3 to 7 V).

It is an object of the present invention to provide a voltage generator-booster for supplying, alongside a variation in supply voltage, an approximately constant voltage level higher or lower than the supply voltage itself.

According to the present invention, there is provided a voltage generator-booster for supplying an approximately constant voltage level, and as claimed in Claim 1.

A preferred, non-limiting embodiment of the present invention will be described by way of example with reference to the accompanying drawings, in which:
Figure 1 shows a block diagram of the generator-booster according to the present invention;
Figure 2 shows a simplified circuit diagram of the Figure 1 generator-booster;
Figure 3 shows a graph of the output voltage of the Figure 2 generator-booster alongside a variation in supply voltage;
Figures 4 to 6 show the plot of the voltages measured at nodes of the Figure 2 diagram, for three different supply voltage values.

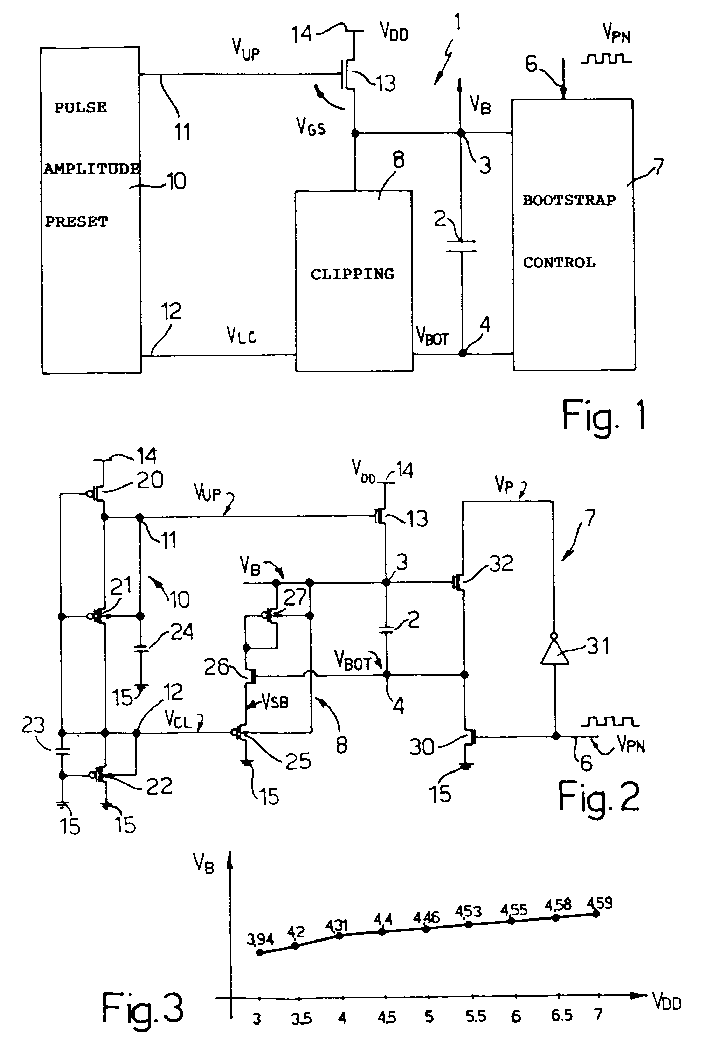

The voltage generator-booster 1 in Figure 1 comprises a bootstrap capacitor 2 in turn presenting a first and second terminal 3, 4; terminal 3 defining the output node presenting bootstrap voltage V_{B}; and terminal 4 defining the pull-up node which is brought alternately to low and high voltage (control voltage V_{BOT}) during precharge and pull-up. Nodes 3 and 4 are connected to a bootstrap control stage 7 for controlling pull-up of node 4 and hence of output node 3, and the input terminal 6 of which is supplied with a pump signal V_{PN} oscillating between 0 V and supply voltage V_{DD}, and which determines the precharge and pull-up sequence of capacitor 2.

A clipping stage 8 is connected to nodes 3 and 4, and cooperates with bootstrap control stage 7 so as to lock bootstrap voltage V_{B} at output node 3 in controlled manner and at a predetermined value, and block pull-up of node 4 by bootstrap control stage 7 when clipping stage 8 is turned on during pull-up. Blocking is preferably achieved by disconnecting voltage V_{BOT} at node 4 during pull-up, and locking it to voltage V_{B} at output node 3, so that clipping of V_{B} automatically also clips V_{BOT}.

A pulse amplitude preset stage 10 provides for generating a precharge reference voltage V_{UP} and a turn-on reference voltage V_{LC} for respectively determining the charge voltage of capacitor 2 during precharge, and the turn-on value of clipping stage 8. For which purpose, stage 10 presents two output terminals 11 and 12 (presenting reference voltages V_{UP} and V_{LC}) respectively connected to the gate terminal of a MOS transistor 13, and to clipping stage 8.

Transistor 13 is interposed between output node 3 and a supply line 14 at voltage V_{DD}, so as to permit charging of capacitor 2 during the precharge step. In other words, transistor 13 provides for limiting the precharge voltage of capacitor 2 to the value set by precharge reference voltage V_{UP}, minus the voltage drop V_{GS} between its source and gate terminals, and is turned off during pull-up so as to disconnect output node 3 from supply line 14.

The Figure 1 generator-booster operates as follows. During the precharge step determined by a high value (V_{DD}) of pump signal V_{PN}, pull-up node 4 is maintained at a low voltage (V_{BOT} = 0 V) to enable capacitor 2 to be charged to the value set by precharge reference voltage V_{UP} minus V_{GS}. Typically, precharge reference voltage V_{UP} is roughly 3 V, and bootstrap voltage V_{B} at output node 3 during precharge is roughly 2 V.

During pull-up, as pump signal V_{PN} falls to ground voltage (0 V), this is accompanied by an inverse increase in potential V_{BOT} at pull-up node 4 and hence in potential V_{B} at output node 3; and, upon potential V_{BOT} at pull-up node 4 reaching the predetermined value set by turn-on reference voltage V_{LC}, clipping stage 8 is turned on to lock bootstrap voltage V_{B} and block pull-up of node 4 by stage 7, so that bootstrap voltage V_{B} is locked to the value determined by clipping stage 8. Typically, turn-on reference voltage V_{LC} is roughly 1.5 V; the turn-on voltage of clipping stage 8 (control voltage V_{BOT}) ranges between 2.5 and 3 V; and bootstrap voltage V_{B}, during pull-up, ranges between roughly 3.9 and 4.6 V, depending on supply voltage V_{DD}.

In other words, bootstrap voltage V_{B} is basically clipped in two ways: by preventing capacitor 2 from being charged to a high level; and by preventing output node 3 from exceeding the predetermined value. In addition to which, pull-up node 4 is clipped by disconnecting it from the pumping action of signal V_{PN} to prevent unnecessary consumption.

Figure 2 shows one embodiment of the Figure 1 generator-booster.

In Figure 2, pulse amplitude preset stage 10 comprises the series connection of three P-channel transistors 20, 21, 22 between supply line 14 and ground line 15. More specifically, transistor 20 is a resistive type (low width/length W/L ratio) with its source terminal connected to supply line 14, its drain terminal defining output terminal 11 of stage 10, and its gate terminal connected to output terminal 12; transistor 21 is a diode-connected native transistor (with no alteration in its threshold voltage during fabrication, and therefore presenting a high threshold voltage) with its source terminal connected to output terminal 11, and its drain and gate terminals connected to each other and to output terminal 12; and transistor 22 is also a diode-connected native transistor with its source terminal connected to output terminal 12, and its gate and drain terminals connected to each other and to ground line 15. A preferably 0.5 pF capacitor 23 is interposed between ground line 15 and output terminal 12; the body region of transistor 22 is connected to output terminal 12; and the body region of transistor 21 is connected to output terminal 11 and, via a capacitor 24 of, say, 0.5 pF, to ground line 15.

Clipping stage 8 comprises a P-channel MOS transistor 25 with its drain terminal connected to ground line 15, its gate terminal connected to output terminal 12, and its source terminal connected to the source terminal of an N-channel transistor 26 (presenting voltage V_{SB}). The gate terminal of transistor 26 is connected to pull-up node 4, and its drain terminal to the drain terminal of a diode-connected P-channel transistor 27 which therefore presents its gate terminal connected to its drain terminal, and its source terminal connected to output node 3. The body regions of transistors 25 and 27 are both connected to output node 3.

Transistor 13 here comprises an N-channel native transistor with a low threshold voltage; and the capacitor is preferably 2 pF.

Bootstrap control stage 7 comprises an N-channel transistor 30 with its source terminal connected to ground line 15, its gate terminal connected to input terminal 6, and its drain terminal connected to pull-up node 4; and an inverter 31 with its input connected to input terminal 6, and its output connected to the drain terminal of a low-threshold N-channel native transistor 32 with its gate terminal connected to output node 3, and its source terminal connected to pull-up node 4. The output of inverter 31 therefore presents an inverted pump signal V_{P} opposite to signal V_{PN} at input terminal 6.

The generator-booster in Figure 2 operates as follows. When pump signal V_{PN} is high, transistor 30 is on and keeps pull-up node 4 grounded; at the same time, the output of inverter 31 is low (V_{P} = 0 V) and transistor 32 is off; output terminal 12 presents a voltage V_{LC} of roughly 1.5 V given by the voltage drop across the gate and source terminals of transistor 22; output terminal 11 presents a voltage V_{UP} of roughly 3 V given by the sum of V_{LC} and the voltage drop across the gate and source terminals of transistor 21; transistor 13 is on, thus permitting capacitor 2 to be charged to the specified V_{UP} value minus V_{GS}, i.e. to roughly 2 V (which therefore also represents the value of voltage V_{B} during precharging); and clipping stage 8 is off, by virtue of the voltage V_{BOT} at the gate terminal of transistor 26 being lower than the voltage V_{SB} at its source terminal, so that transistor 26 is off.

When pump signal V_{PN} switches to low and its inverted signal V_{P} increases, the voltage V_{BOT} at pull-up node 4 also begins increasing, "drawn" by transistor 32 which has come on; and, at the same time, bootstrap voltage V_{B} also increases. Upon voltage V_{BOT} reaching the value specified by turn-on reference voltage V_{LC} plus the difference in potential between the drain and gate terminals of transistor 25, and the difference in potential between the gate and source terminals of transistor 26 (total 2.5-3 V), transistor 26 comes on, thus turning on clipping stage 8 which clips the voltage V_{B} at output node 3 to a value equal to the sum of the voltage drops across transistors 25-27. Which value varies little alongside supply voltage V_{DD}: between 3.94 V when V_{DD} = 3 V, and 4.59 V when V_{DD} = 7 V.

Clipping of V_{B} automatically results in clipping of V_{BOT} via transistor 32 which, despite even a high increase in inverted pump voltage V_{P} (to 7 V in the case of a 7 V supply voltage), prevents its source terminal from following the course of the drain voltage. Clipping and blocking voltage V_{BOT} at the gate terminal of transistor 26 confirms the clipping action of stage 8, so that bootstrap voltage V_{B} is blocked to the predetermined value.

In the Figure 2 circuit, the clipping voltage imposed by stage 8 depends both on the turn-on value V_{LC} imposed by pulse amplitude preset stage 10, and on the voltage values of transistors 25-27, so that the maximum value of bootstrap voltage V_{B} may be adjusted by simply acting on turn-on reference voltage V_{LC}.

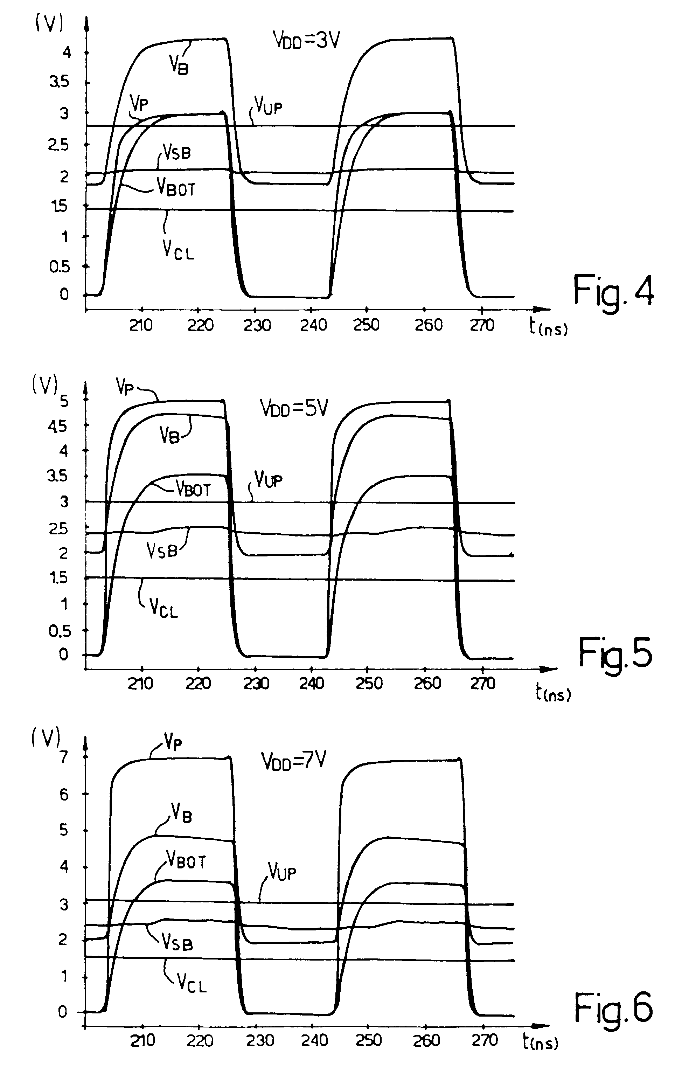

Figures 4-6 show graphs of voltages V_{P}, V_{BOT}, V_{B}, V_{SB}, V_{LC}, V_{UP} in the Figure 2 circuit for three different supply voltage V_{DD} values. Each graph shows the gradual, nonimpulsive pattern of the voltages due to the delays involved; the gradual turn-on of the various components; the very small variation in bootstrap voltage V_{B} in each case; and the manner in which V_{B} differs in each case in relation to inverted pump voltage V_{P}, i.e. is higher than the pump voltage when the supply voltage is low (3 V), is only slightly lower than the pump voltage when the supply voltage is medium (5 V), and differs considerably from the pump voltage when the supply voltage is high (7 V).

The advantages of the generator-booster described are as follows. Firstly, as shown, it provides for supplying a bootstrap voltage that varies very little, even in the presence of widely differing supply voltages. Secondly, it provides for considerably reducing consumption, in that the only part supplied with current is pulse amplitude preset stage 10 via resistive transistor 20, which draws different current levels depending on the supply voltage. The other stages in fact consume and are supplied with no current, except for small capacitive peaks when switching from one step to the other. Thirdly, it is extremely straightforward in design, reliable, and easy to integrate. And fourthly, the bootstrap, turn-on and clipping voltage values may be set as required by simply sizing the transistors accordingly, or using different types of transistors (e.g. other than native).

Clearly, changes may be made to the generator-booster as described and illustrated herein without, however, departing from the scope of the claims. For example, the Figure 1 stages may be formed differently from those shown in Figure 2, providing they perform the clipping functions as indicated; changes may be made to the components shown, using other than native transistors for the references, or other elements capable of ensuring predetermined voltages; the capacitors may be formed using integrated capacitors, appropriately connected MOS transistors, or any existing technique; and changes may be made to the component and voltage values shown, which are purely indicative.

## Claims

1. A voltage generator-booster (1) for supplying an approximately constant voltage level, comprising a bootstrap capacitor (2) with a first terminal (3) connected to a first reference potential line (14), and a second terminal (4) connected to a pull-up node (4); and a bootstrap control stage (7) connected to said pull-up node (4) and presenting a pump input (6) supplied with a pump signal (V_{PN}) switchable between two different states defining a precharge step and a pull-up step of said bootstrap capacitor; characterized in that it comprises precharge limiting means (13) connected to said first terminal (3) of said bootstrap capacitor (2) and supplied with a precharge reference signal (V_{UP}), and which, at said precharge step, provide for limiting the charge of said bootstrap capacitor (2) to a limitation value related to said precharge reference signal; and a limiting stage (8) connected to said first terminal (3) of said bootstrap capacitor (2), so as to limit the potential at said first terminal of said bootstrap capacitor at said pull-up step.

2. A generator-booster as claimed in Claim 1, characterized in that said bootstrap control stage (7) comprises decoupling means (30, 32) located between said pump input (6) and said pull-up node (4), and which provide for decoupling said pump input from said pull-up node when the pull-up node reaches a predetermined voltage value.

3. A generator-booster as claimed in Claim 1 or 2, characterized in that it comprises a pulse amplitude preset stage (10) for generating said precharge reference signal (V_{UP}), and a turn-on reference signal (V_{LC}) supplied to said limiting stage (8).

4. A generator-booster as claimed in any one of the foregoing Claims, characterized in that said precharge limiting means comprise a precharge transistor (13) with a first terminal connected to said first reference potential line (14), a second terminal connected to said first terminal (3) of said bootstrap capacitor (2), and a control terminal supplied with said precharge reference signal (V_{UP}).

5. A generator-booster as claimed in Claim 4, characterized in that said precharge transistor (13) is a native MOS transistor.

6. A generator-booster as claimed in one of the foregoing Claims from 3 to 5, characterized in that said limiting stage (8) comprises a limiting branch (25-27) connected between said first terminal (3) of said bootstrap capacitor (2) and a second reference potential line (15); an input terminal (12) supplied with said turn-on reference signal (V_{LC}); and a turn-on element (25, 26) interposed along said limiting branch; said turn-on element being connected to said second terminal (4) of said bootstrap capacitor and to said input terminal (12) of said limiting stage; and said turn-on element (25, 26) turning on said limiting branch when the voltage at said second terminal (4) of said bootstrap capacitor (2) reaches a value determined by said turn-on reference signal.

7. A generator-booster as claimed in Claim 6, characterized in that said turn-on element (25, 26) comprises a first (26) and second (25) turn-on transistor interposed along said limiting branch (25-27); said first turn-on transistor (26) presenting a control terminal connected to said second terminal (4) of said bootstrap capacitor (2); and said second turn-on transistor (25) presenting a control terminal defining said input terminal (12) of said limiting stage (8).

8. A generator-booster as claimed in any one of the foregoing Claims, characterized in that said bootstrap control stage (7) comprises a first (30) and second (32) decoupling transistor operating in push-pull manner; said first decoupling transistor (30) being interposed between said second terminal (4) of said bootstrap capacitor (2) and a second reference potential line (15), and presenting a control terminal connected to said pump input (6); and said second decoupling transistor (32) being interposed between said pump input (6) and said second terminal of said bootstrap capacitor, and presenting a control terminal connected to said first terminal (3) of said bootstrap capacitor (2).

9. A generator-booster as claimed in Claim 8, characterized in that said first and second decoupling transistors (30, 32) are the same type; and an inverting element (31) is interposed between said pump input (6) and said second decoupling transistor (32).

10. A generator-booster as claimed in Claim 9, characterized in that said first and second decoupling transistors (30, 32) are N-channel MOS transistors.

11. A generator-booster as claimed in any one of the foregoing Claims from 3 to 10, characterized in that said pulse amplitude preset stage (10) comprises a voltage setting branch (20-22) interposed between said first reference potential line (14) and a second reference potential line (15); said voltage setting branch comprising a number of constant-voltage-drop elements (21, 22) connected in series, and resistance means (20) interposed between said constant-voltage-drop elements and said first reference potential line (14).

12. A generator-booster as claimed in Claim 11, characterized in that said constant-voltage-drop elements (21, 22) comprise diode-connected transistors; and said resistance means (20) comprise a MOS transistor.

## Patentansprüche

1. Höherspannungsgenerator (1) zum Liefern eines angenähert konstanten Spannungspegels, umfassend: einen Hebekondensator (2) mit einem ersten Anschlußpunkt (3), der mit einer ersten Referenzpotentialleitung (14) verbunden ist, und einem zweiten Anschlußpunkt (4), der mit einem Anhebe-Knotenpunkt (4) verbunden ist; und eine Spannungshebe-Steuerstufe (7), die mit dem Anhebe-Knotenpunkt (4) verbunden ist und einen Pumpeingang (6) aufweist, der mit einem Pumpsignal (V_{PN}) beliefert wird, das zwischen zwei verschiedenen Zuständen schaltbar ist, die einen Voraufladeschritt und einen Anhebeschritt des Hebekondensators bestimmen; dadurch gekennzeichnet, daß ereine Vorauflade-Begrenzungseinrichtung (13) umfaßt, die mit dem ersten Anschlußpunkt (3) des Hebekondensators (2) verbunden ist und mit einem Vorauflade-Referenzsignal (V_{UP}) beliefert wird, und die im Voraufladeschritt dafür sorgt, die Ladung des Hebekondensators (2) auf einen Grenzwert, der auf das Vorauflade-Referenzsignal bezogen ist, zu begrenzen; und eine Begrenzerstufe (8) umfaßt, die mit dem ersten Anschlußpunkt (3) des Hebekondensators (2) verbunden ist derart, daß das Potential des ersten Anschlußpunkts des Hebekondensators beim Anhebungsschritt begrenzt wird.

2. Höherspannungsgenerator nach Anspruch 1, dadurch gekennzeichnet, daß die Spannungshebe-Steuerstufe (7) Entkopplungseinrichtungen (30, 32) umfaßt, die zwischen dem Pumpeingang (6) und dem Anhebe-Knotenpunkt (4) angeordnet sind und für eine Entkopplung des Pumpeingangs vom Anhebe-Knotenpunkt dann, wenn der Anhebe-Knotenpunkt einen gegebenen Spannungswert erreicht, sorgen.

3. Höherspannungsgenerator nach Anspruch 1 oder 2, dadurch gekennzeichnet, daß er eine Impulsamplituden-Voreinstellstufe (10) zum Erzeugen des Vorauflade-Referenzsignals (V_{UP}) und eines Einschalt-Referenzsignals (V_{LC}), das an die Begrenzerstufe (8) geliefert wird, umfaßt.

4. Höherspannungsgenerator nach einem der vorhergehenden Ansprüche, dadurch gekennzeichnet, daß die Vorauflade-Begrenzungseinrichtung einen Voraufladetransistor (13) umfaßt, von dem ein erster Anschlußpunkt an die erste Bezugspotentialleitung (14) angeschlossen ist, ein zweiter Anschlußpunkt an den ersten Anschlußpunkt (3) des Hebekondensators (2) angeschlossen ist und ein Steueranschluß mit dem Vorauflade-Referenzsignal (V_{UP}) beliefert wird.

5. Höherspannungsgenerator nach Anspruch 4, dadurch gekennzeichnet, daß der Voraufladetransistor (13) ein natürlicher MOS-Transistor ist.

6. Höherspannungsgenerator nach einem der vorhergehenden Ansprüche von 3 bis 5, dadurch gekennzeichnet, daß die Begrenzerstufe (8) umfaßt: einen begrenzenden Zweig (25 bis 27), der zwischen den ersten Anschlußpunkt (3) des Hebekondensators (2) und eine zweite Referenzpotentialleitung (15) geschaltet ist; einen Eingangsanschluß (12), der mit dem Einschalt-Referenzsignal (V_{LC}) beliefert wird; und ein Einschaltelement (25, 26), das entlang dem begrenzenden Zweig eingesetzt ist; wobei das Einschaltelement (25, 26) mit dem zweiten Anschlußpunkt (4) des Hebekondensators und mit dem Eingangsanschluß (12) der Begrenzerstufe verbunden ist und den begrenzenden Zweig einschaltet, wenn die Spannung am zweiten Anschlußpunkt (4) des Hebekondensators (2) einen Wert erreicht, der durch das Einschalt-Referenzsignal bestimmt wird.

7. Höherspannungsgenerator nach Anspruch 6, dadurch gekennzeichnet, daß das Einschaltelement (25, 26) einen ersten Einschalttransistor (26) und einen zweiten Einschalttransistor (25) umfaßt, die entlang dem begrenzenden Zweig (25 bis 27) eingesetzt sind, wobei der erste Einschalttransistor (26) einen Steueranschluß aufweist, der mit dem zweiten Anschlußpunkt (4) des Hebekondensators (2) verbunden ist, und der zweite Einschalttransistor (25) einen Steueranschluß aufweist, der den Eingangsanschluß (12) der Begrenzerstufe (8) bildet.

8. Höherspannungsgenerator nach einem der vorhergehenden Ansprüche, dadurch gekennzeichnet, daß die Spannungshebe-Steuerstufe (7) einen ersten Entkopplungstransistor (30) und einen zweiten Entkopplungstransistor (32) umfaßt, die im Gegentakt arbeiten; wobei der erste Entkopplungstransistor (30) zwischen den zweiten Anschlußpunkt (4) des Hebekondensators (2) und eine zweite Referenzpotentialleitung (15) geschaltet ist und einen Steueranschluß aufweist, der mit dem Pumpeingang (6) verbunden ist, und der zweite Entkopplungstransistor (32) zwischen den Pumpeingang (6) und den zweiten Anschlußpunkt des Hebekondensators eingeschaltet ist und einen Steueranschluß aufweist, der mit dem ersten Anschlußpunkt (3) des Hebekondensators (2) verbunden ist.

9. Höherspannungsgenerator nach Anspruch 8, dadurch gekennzeichnet, daß der erste und der zweite Entkopplungstransistor (30, 32) von gleichem Typ sind; und daß zwischen den Pumpeingang (6) und den zweiten Entkopplungstransistor (32) ein invertierendes Element (31) eingesetzt ist.

10. Höherspannungsgenerator nach Anspruch 9, dadurch gekennzeichnet, daß der erste und der zweite Entkopplungstransistor (30, 32) n-Kanal-MOS-Transistoren sind.

11. Höherspannungsgenerator nach einem der vorhergehenden Ansprüche von 3 bis 10, dadurch gekennzeichnet, daß die Impulsamplituden-Voreinstellstufe (10) einen Spannungseinstellzweig (20 bis 22) aufweist, der zwischen die erste Referenzpotentialleitung (14) und eine zweite Referenzpotentialleitung (15) eingeschaltet ist; und daß der Spannungseinstellzweig eine Anzahl von Konstant-Spannungsabfall-Elementen (21, 22), die in Reihe geschaltet sind, und Widerstandseinrichtungen (20), die zwischen die Konstant-Spannungsabfall-Elemente und die erste Referenzpotentialleitung (14) geschaltet sind, umfaßt.

12. Höherspannungsgenerator nach Anspruch 11, dadurch gekennzeichnet, daß die Konstant-Spannungsabfall-Elemente (21, 22) diodengeschaltete Transistoren umfassen und die Widerstandseinrichtungen (20) einen MOS-Transistor umfassen.

## Revendications

1. Amplificateur générateur de tension (1) destiné à alimenter un niveau de tension approximativement constant, comportant un condensateur d'amorçage (2) ayant une première borne (3) reliée à une première ligne de potentiel de référence (14), et une seconde borne (4) reliée à un noeud d'excursion haute (4), et un étage de commande d'amorçage (7) relié audit noeud d'excursion haute (4) et présentant une entrée de pompe (6) alimentée par un signal de pompe (V_{PN}) pouvant être commutée entre deux états différents définissant une étape de précharge et une étape d'excursion haute dudit condensateur d'amorçage, caractérisé en ce qu'il comporte des moyens de limitation de précharge (13) reliés à ladite première borne (3) dudit condensateur d'amorçage (2) et alimentés par un signal de référence de précharge (V_{UP}), et qui, au niveau de ladite étape de précharge, assure la limitation de la charge dudit condensateur d'amorçage (2) à une valeur limite par rapport audit signal de référence de précharge, et un étage de limitation (8) relié à ladite première borne (3) dudit condensateur d'amorçage (2) de manière à limiter le potentiel à ladite première borne dudit condensateur d'amorçage au niveau de ladite étape d'excursion haute.

2. Amplificateur générateur selon la revendication 1, caractérisé en ce que ledit étage de commande d'amorçage (7) comporte des moyens de découplage (30, 32) situés entre ladite entrée de pompe (6) et ledit noeud d'excursion haute (4), et qui assurent le découplage de ladite entrée de pompe à partir dudit noeud d'excursion haute lorsque le noeud d'excursion haute atteint une valeur de tension prédéterminée.

3. Amplificateur générateur selon la revendication 1 ou 2, caractérisé en ce qu'il comporte un étage de préétablissement d'amplitude d'impulsion (10) pour produire ledit signal de référence de précharge (V_{UP}), et un signal de référence d'activation (VLC) alimenté vers ledit étage de limitation (8).

4. Amplificateur générateur selon l'une quelconque des revendications précédentes, caractérisé en ce que lesdits moyens de limitation de précharge comportent un transistor de précharge (13) ayant une première borne reliée à ladite première ligne de potentiel de référence (14), une seconde borne reliée à ladite première borne (3) dudit condensateur d'amorçage (2), et une borne de commande alimentée par ledit signal de référence de précharge (V_{UP}).

5. Amplificateur générateur selon la revendication 4, caractérisé en ce que ledit transistor de précharge (13) est un transistor MOS natif.

6. Amplificateur générateur selon l'une quelconque des revendications 3 à 5, caractérisé en ce que ledit étage de limitation (8) comporte une branche de limitation (25-27) reliée entre ladite première borne (3) dudit condensateur d'amorçage (2) et une seconde ligne de potentiel de référence (15), une borne d'entrée (12) alimentée par ledit signal de référence d'activation (V_{LC}), et un élément d'activation (25, 26) interposé le long de ladite branche de limitation, ledit élément d'activation étant relié à ladite seconde borne (4) dudit condensateur d'amorçage et à ladite borne d'entrée (12) dudit étage de limitation, et ledit élément d'activation (25, 26) rendant actif ladite branche de limitation lorsque la tension au niveau de ladite seconde borne (4) dudit condensateur d'amorçage (2) atteint une valeur déterminée par ledit signal de référence d'activation.

7. Amplificateur générateur selon la revendication 6, caractérisé en ce que ledit élément d'activation (25, 26) comporte un premier transistor (26) et un second transistor passant (25) interposés le long de ladite branche de limitation (25-27), ledit premier transistor passant (26) présentant une borne de commande reliée à ladite seconde borne (4) dudit condensateur d'amorçage (2), et ledit second transistor passant (25) présentant une borne de commande définissant ladite borne d'entrée (12) dudit étage de limitation (8).

8. Amplificateur générateur selon l'une quelconque des revendications précédentes, caractérisé en ce que ledit étage de commande d'amorçage (7) comporte un premier (30) et un second transistor de découplage (32) fonctionnant de manière symétrique, ledit premier transistor de découplage (30) étant interposé entre ladite seconde borne (4) dudit condensateur d'amorçage (2) et une seconde ligne de potentiel de référence (15), et présentant une borne de commande reliée à ladite entrée de pompe (6), et ledit second transistor de découplage (32) étant interposé entre ladite entrée de pompe (6) et ladite seconde borne dudit condensateur d'amorçage, et présentant une borne de commande reliée à ladite première borne (3) dudit condensateur d'amorçage (2).

9. Amplificateur générateur selon la revendication 8, caractérisé en ce que lesdits premier et second transistors de découplage (30, 32) sont du même type, et un élément d'inversion (31) est interposé entre ladite entrée de pompe (6) et ledit second transistor de découplage (32).

10. Amplificateur générateur selon la revendication 9, caractérisé en ce que lesdits premier et second transistors de découplage (30, 32) sont des transistors MOS à canal N.

11. Amplificateur générateur selon l'une quelconque des revendications 3 à 10, caractérisé en ce que ledit étage de préétablissement d'amplitude d'impulsion (10) comporte une branche d'établissement, de tension (20-22) interposée entre ladite première ligne de potentiel de référence (14) et une seconde ligne de potentiel de référence (15), ladite branche d'établissement de tension comportant plusieurs éléments à chute de tension constante (21, 22) reliés en série, et des moyens formant résistance (20) interposés entre lesdits éléments à chute de tension constante et ladite première ligne de potentiel de référence (14).

12. Amplificateur générateur selon la revendication 11, caractérisé en ce que lesdits éléments à chute de tension constante (21, 22) sont constitués de transistors reliés à une diode, et lesdits moyens formant résistance (20) sont constitués d'un transistor MOS.
